# EUROPEAN PATENT APPLICATION

(11) **EP 4 478 442 A1**
(43) Date of publication of application: **18.12.2024**
(21) Application number: 23752859.1
(22) Date of filing: 07.02.2023
(51) Int. Cl.: H01M 4/131, H01M 4/36, H01M 4/48, H01M 10/052

(54) **SECONDARY BATTERY**

(30) Priority: 10.02.2022 JP 2022019842
(71) Applicant: Panasonic Intellectual Property Management Co., Ltd., Kadoma-shi, Osaka 571-0057 (JP)
(72) Inventor: NISHIMORI, Yuta, Kadoma-shi, Osaka 571-0057 (JP); SATOU, Yoshinori, Kadoma-shi, Osaka 571-0057 (JP); SASAKI, Takashi, Kadoma-shi, Osaka 571-0057 (JP); HARADA, Maho, Kadoma-shi, Osaka 571-0057 (JP); NAKAYAMA, Takahito, Kadoma-shi, Osaka 571-0057 (JP)
(74) Representative: Novagraaf International SA
(86) International application number: PCT/JP2023/003975
(87) International publication number: WO 2023/153395

(57) **Abstract**

A secondary battery includes a positive electrode, a negative electrode, a separator interposed between the positive electrode and the negative electrode, and a lithium-ion conductive electrolyte. The positive electrode includes a positive electrode current collector, and a positive electrode active material layer supported on the positive electrode current collector. The positive electrode active material layer contains a first metal oxide that is a positive electrode active material, and a second metal oxide different from the first metal oxide. The first metal oxide includes a lithium-containing transition metal oxide. A metal element M contained in the second metal oxide includes an atom m 1 and an atom m2 having different valences from each other. The atom m 1 and the atom m2 are the same element. The metal element M is at least one metal element selected from the group consisting of Al, Ti, Si, Zr, Mg, Nb, Ta, Sn, Ni, V, and Cr. An oxide of the atom m 1 and an oxide of the atom m2 are different in temperature dependence of electrical resistance.

## Description

### [Technical Field]

The present disclosure relates to a secondary battery, more specifically to an improvement of a positive electrode for a secondary battery.

### [Background Art]

For a secondary battery, as its energy density is increased, improvement in safety is required. In particular, it is important to reduce the heat generation due to internal short circuit. When the battery has internal short circuit, even though the shorted portion is small, the Joule heat generated by short-circuit current melts the separator, to form a larger shorted portion. When the shorted portion expands and the short-circuit current increases, the battery temperature rises acceleratingly. The higher the energy density of the secondary battery is, the more the Joule heat generated by short-circuit current increases.

Patent Literature 1 proposes a positive electrode active material comprising a composite oxide mainly composed of lithium and nickel and having a layered crystal structure, which is a powder having an element composition represented by a general formula: LiₐNi_{1-b-c}M1_{b}M2_{c}O₂, where 0.95 ≤ a ≤ 1.05, 0.01 ≤ b ≤ 0. 10, and 0.10 ≤ c ≤ 0.20 (here, M1 is one or more elements selected from Al, B, Y, Ce, Ti, Sn, V, Ta, Nb, W, and Mo, and M2 is one or more elements selected from Co, Mn, and Fe), and is characterized by that when the powder is pressure-molded, an electrical conductivity σ at 25 °C of a powder compact at a compression density of 4.0 g/cm³ is within the range of 5×10⁻² ≥ σ ≥ 5×10⁻⁴ [S/cm].

### [Citation List]

### [Patent Literature]

Patent Literature 1: Japanese Laid-Open Patent Publication No. 2000-315502

### [Summary of Invention]

### [Technical Problem]

Patent Literature 1 says that, according to the above positive electrode active material, the thermal stability in a charged state can be improved, and even in the situation where the battery is internally short-circuited, the Joule heat generation by the short-circuit current can be suppressed, which makes it easy to ensure the safety.

However, when controlling the electrical conductivity of the powder compact as in Patent Literature 1, the battery ends up in being highly resistant as a whole, causing a deterioration in battery performance. Moreover, the solution in Patent Literature 1 is specialized for a composite oxide mainly composed of lithium and nickel, and is poor in versatility. An object of the present disclosure is to provide, regardless of the type and characteristics of the positive electrode active material, a positive electrode material that can maintain high resistance even in a heat-generating environment such as in the event of short circuit.

### [Solution to Problem]

One aspect of the present disclosure relates to a secondary battery, including: a positive electrode; a negative electrode; a separator interposed between the positive electrode and the negative electrode; and a lithium-ion conductive electrolyte, wherein the positive electrode includes a positive electrode current collector, and a positive electrode active material layer supported on the positive electrode current collector, the positive electrode active material layer contains a first metal oxide that is a positive electrode active material, and a second metal oxide different from the first metal oxide, the first metal oxide includes a lithium-containing transition metal oxide, a metal element M contained in the second metal oxide includes an atom m1 and an atom m2 having different valences from each other, the atom m1 and the atom m2 are the same element, the metal element M is at least one metal element selected from the group consisting of Al, Ti, Si, Zr, Mg, Nb, Ta, Sn, Ni, V, and Cr, and an oxide of the atom m1 and an oxide of the atom m2 are different in temperature dependence of electrical resistance.

### [Advantageous Effects of Invention]

According to the present disclosure, it is possible to provide a positive electrode material that can maintain high resistance even in a heat-generating environment such as in the event of short circuit.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic longitudinal cross-sectional view of the internal structure of a secondary battery according to an embodiment of the present disclosure.
[FIG. 2] A schematic cross-sectional view of an essential part of a positive electrode according to an embodiment of the present disclosure.
[FIG. 3] An enlarged cross-sectional view of the essential part of the positive electrode of FIG. 2.

### [Description of Embodiments]

Embodiments of a secondary battery according to the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

A secondary battery according to an embodiment of the present disclosure includes a positive electrode, a negative electrode, a separator interposed between the positive electrode and the negative electrode, and a lithium-ion conductive electrolyte.

The positive electrode includes a positive electrode current collector, and a positive electrode active material layer supported on the positive electrode current collector. The positive electrode active material layer includes a first metal oxide that is a positive electrode active material, and a second metal oxide different from the first metal oxide. The first metal oxide includes a lithium-containing transition metal oxide. A metal element M contained in the second metal oxide includes an atom m1 and an atom m2 having different valences from each other. The atom m1 and the atom m2 are the same element. The metal element M is at least one metal element selected from the group consisting of Al, Ti, Si, Zr, Mg, Nb, Ta, Sn, Ni, V, and Cr. An oxide of the atom m1 and an oxide of the atom m2 have different temperature dependences of electrical resistance from each other. That is, the electrical resistance of the oxide of the atom m1 and that of the oxide of the atom m2 change differently from each other along with the rise in temperature.

The second metal oxide acts to enhance the safety in the event of heat generation of the battery. The second metal oxide includes an oxide of the atom m1 and an oxide of the atom m2, and therefore, the temperature dependence of electrical resistance is lower than that of an oxide containing only a metal element M with a single valence. When the temperature dependence of electrical resistance of the second metal oxide is low, the electrical resistance shows no significant change over a wide temperature range, and thus, a high electrical resistance can be maintained even in a heat-generating environment such as in the event of short circuit. As a result, the current is suppressed, and the rise in temperature at the shorted portion is suppressed. The second metal oxide may not be necessarily a positive electrode active material that exhibits electrochemical capacity like the first metal oxide. In other words, the second metal oxide may be substantially electrochemically inert.

For example, when the metal element M is Ti, an oxide of the metal element M may include those of a trivalent Ti atom (Ti³⁺) and a tetravalent Ti atom (Ti⁴⁺) having different valences from each other, namely, Ti₂O₃ and TiO₂. In the positive electrode active material layer containing Ti₂O₃ and TiO₂, when the battery temperature rises due to short circuit and the like, Ti₂O₃ and TiO₂ act as resistance components, to suppress the short-circuit current, and suppress the rise in temperature due to Joule heat generation. Here, Ti₂O₃, as compared to TiO₂, can maintain its high electrical resistance even in a high temperature environment. Therefore, as compared to when only TiO₂ is contained in the positive electrode active material layer, it is possible to more effectively suppress the rise in battery temperature in the evet of short circuit and the like.

The secondary battery according to an embodiment of the present disclosure may be a liquid-type secondary battery containing a liquid electrolyte as a nonaqueous electrolyte, and may be an all-solid secondary battery containing a solid electrolyte as a nonaqueous electrolyte. In the following, with a lithium-ion secondary battery taken as an example, the configurations of their components will be specifically described.

### <Positive electrode>

A positive electrode includes a positive electrode current collector, and a positive electrode active material layer supported on the positive electrode current collector. The positive electrode active material layer includes a first metal oxide that is a positive electrode active material, and a second metal oxide different from the first metal oxide.

### [Positive electrode current collector]

The positive electrode current collector is constituted of a sheet of conductive material. The positive electrode current collector may be a non-porous conductive substrate (metal foil, etc.) or a porous conductive substrate (mesh, net, punched sheet, etc.). The material of the positive electrode current collector may be, for example, stainless steel, aluminum, aluminum alloy, titanium, and the like. The thickness of the positive electrode current collector is, although not particularly limited to, for example, 1 to 50 µm, and may be 5 to 30 µm.

### [Positive electrode active material layer]

The positive electrode active material layer is supported on one or both surfaces of the positive electrode current collector. The positive electrode active material layer, usually, is a positive electrode mixture layer constituted of a positive electrode mixture and is in the form of a layer or film disposed on the positive electrode current collector. The positive electrode mixture includes particles of a positive electrode active material as an essential component, and may further include a binder, a thickener, a conductive agent, and the like as optional components. The positive electrode active material layer can be formed by, for example, applying a positive electrode slurry of a positive electrode mixture dispersed into a dispersion medium, onto the surface of the positive electrode current collector, followed by drying. The dry applied film may be rolled as necessary.

The thickness of the positive electrode active material layer may be, although not particularly limited to, for example, 10 µm or more and 200 µm or less, or 30 µm or more and 100 µm or less. One positive electrode active material layer may be formed of a plurality of layers having different compositions from each other. For example, two or more layers containing active material particles with different average particle diameters from each other may be stacked, or two or more layers differing in the type or composition of positive electrode active material from each other may be stacked.

### (First metal oxide)

The first metal oxide that is the positive electrode active material includes a lithium-containing transition metal oxide. In view of achieving high capacity, a lithium-nickel composite oxide (composite oxide N) containing at least Ni as a transition metal may be included. The composite oxide N may be a lithium-containing transition metal oxide containing Li and Ni and having a layered rock-salt type crystal structure. The proportion of the composite oxide N in the positive electrode active material is, for example, 50 mass% or more, may be 80 mass% or more, and may be 90 mass% or more.

The composite oxide N contains Ni, and may further contain at least one selected from the group consisting of Co, Mn, and Al. Co, Mn, and Al contribute to stabilizing the crystal structure of the composite oxide N.

The composite oxide N is represented by, for example, a formula: Li_{α}Ni_{(1-x1-x2-y-z)}Coₓ₁Mnₓ₂Al_{y}Me_{z}O_{2+β}. The element Me is an element other than Li, Ni, Co, Mn, Al, and O. The value of α representing the atomic ratio of Li satisfies, for example, 0.95 ≤ α ≤1.05, and increases and decreases during charging and discharging. In (2+β) representing the atomic ratio of O, β satisfies -0.05 ≤ β ≤ 0.05. The value of 1-x1-x2-y-z (= v) representing the atomic ratio of Ni is, for example, 0.50 or more, may be 0.80 or more, and may be 0.90 or more, or 0.95 or more. The value of v representing the atomic ratio of Ni may be 0.98 or less, and may be 0.95 or less.

The value of x1 representing the atomic ratio of Co is, for example, 0.1 or less (0 ≤ x1 ≤ 0.1), and may be 0.08 or less, 0.05 or less, and may be 0.01 or less. When x1 is 0, this encompasses a case where Co is below the detection limit.

The value of x2 representing the atomic ratio of Mn is, for example, 0.1 or less (0 ≤ x2 ≤ 0.1), and may be 0.08 or less, may be 0.05 or less, and may be 0.03 or less. The value of x2 may be 0.01 or more, and may be 0.03 or more.

The value of y representing the atomic ratio of Al is, for example, 0.1 or less (0 ≤ y ≤ 0.1), and may be 0.08 or less, may be 0.05 or less, and may be 0.03 or less. The value of y may be 0.01 or more, and may be 0.03 or more.

The value of z representing the atomic ratio of the element Me is, for example, 0 ≤ z ≤ 0.10, may be 0 < z ≤ 0.05, and may be 0.001 ≤ z ≤ 0.01.

The element Me may be at least one element selected from the group consisting of Ti, Zr, Nb, Mo, W, Fe, Zn, B, Si, Mg, Ca, Sr, Sc, and Y Note that the element, such as Ti, contained as the element Me in a very small amount in the first metal oxide is an element that constitutes the first metal oxide, and is not an element that acts as a resistance component like the second metal oxide.

The average particle diameter of the positive electrode active material particles is, for example, 3 µm or more and 30 µm or less, and may be 5 µm or more and 25 µm or less. Here, the average particle diameter is a median diameter (D₅₀) at 50% cumulative volume in a volume-based particle size distribution obtained using a laser diffraction particle size distribution analyzer. The active material particles may be separated and collected from the positive electrode. The measuring instrument that can be used is, for example, "LA-750", available from Horiba, Ltd. (HORIBA).

The average particle diameter may be measured from a thickness-wise cross section obtained by cutting the positive electrode mixture layer and the positive electrode current collector together. The cross section may be formed using a cross section polisher (CP). At that time, a thermosetting resin may be packed into the positive electrode mixture layer, and cured. Next, a scanning electron micrograph (hereinafter, a SEM image) of the cross section is taken. The SEM image is taken such that 10 or more positive electrode active material particles are observed. The equivalent circle diameters of cross sections of 10 or more positive electrode active material particles are obtained through image processing, and their average value is determined as an average particle diameter. Here, an equivalent circle diameter refers to a diameter of a circle having the same area as the area of each particle observed on a cross section of the particle (the area of the particle observed on a cross section of the positive electrode mixture layer).

### (Second metal oxide)

A metal element M contained in the second metal oxide includes an atom m1 and an atom m2 having different valences from each other. The atom m1 and the atom m2 are the same element. The metal element M is at least one metal element selected from the group consisting of Al, Ti, Si, Zr, Mg, Nb, Ta, Sn, Ni, V, and Cr. An oxide of the atom m1 and an oxide of the atom m2 are different in temperature dependence of electrical resistance.

In the positive electrode active material layer, the amount of the metal element M contained in the second metal oxide may be, relative to the total amount of metal elements except Li in the first metal oxide, 0.03 mol% or more and 10 mol% or less, and may be 0.05 mol% or more and 1 mol% or less. Such an element balance can increase the effect by the second metal oxide to improve the safety of the secondary battery.

The metal element M preferably includes at least Ti. The element M may be used singly, or in combination of two or more kinds.

When the metal element M is Ti, an oxide of the metal element M may include those of a trivalent Ti atom (Ti³⁺) and a tetravalent Ti atom (Ti⁴⁺) having different valences from each other, namely, Ti₂O₃ and TiO₂, and may further include an oxide containing a divalent Ti atom. To allow Ti₂O₃ and TiO₂, which are different in temperature dependency of electrical resistance, to be present in the positive electrode active material layer, and thereby to maintain high resistance in a heat-generating environment, the atomic ratio Ti³⁺/Ti⁴⁺ of Ti³⁺ to Ti⁴⁺ is preferably 1.3 or more and 3 or less, more preferably 1.3 or more and 2 or less. Therefore, the oxide of the metal element M in the positive electrode active material layer is preferably an oxide represented by TiOₓ where x is 1.5 or more and less than 2, preferably 1.5 or more and less than 1.8.

When the metal element M is V, the oxide of the metal element M may include those of a trivalent V atom (V³⁺) and a tetravalent V atom (V⁴⁺) having different valences from each other, namely, V₂O₃ and VO₂, and may further include an oxide containing a divalent V atom and/or an oxide containing a pentavalent V atom. To allow V₂O₃ and VO₂, which are different in temperature dependency of electrical resistance, to be present in the positive electrode active material layer, and thereby to maintain high resistance in a heat-generating environment, the atomic ratio V³⁺/V⁴⁺ of V³⁺ to V⁴⁺ is preferably 1.3 or more and 3 or less, more preferably 1.3 or more and 2 or less. Therefore, the oxide of the metal element M in the positive electrode active material layer is preferably an oxide represented by VOₓ where x is 1.5 or more and less than 2, preferably 1.5 or more and less than 1.8.

The oxide of the metal element M may be in a crystalline state, may be in an amorphous state, and may be a mixed state thereof.

The atomic ratio between the atoms m1 and m2 contained in the metal element M (e.g., the atomic ratio Ti³⁺/Ti⁴⁺ of Ti³⁺ to Ti⁴⁺) can be determined by X-ray absorption fine structure (XAFS) spectroscopy, X-ray photoelectron spectroscopy (XPS), and the like.

An electrochemical device is disassembled, to take out an electrode, with which a thin sample (approx. 100 nm thick) of the active material layer for transmission electron microscope (TEM) observation is prepared. An active material particle in the sample is observed with a TEM. With respect to the active material particle, an elemental mapping by energy dispersive X-ray spectroscopy (TEM-EDS analysis) is performed, to confirm the presence of the second metal oxide on the surface of the active material particle.

The form of the second metal oxide is not limited to a particular one. The second metal oxide may be contained in a film covering at least part of the surface of the positive electrode active material (first metal oxide), may be attached in the form of particles to the surface of the first metal oxide, and may be mixed in the form of particles with the first metal oxide within the positive electrode active material layer. For example, the second metal oxide may be packed in the gaps between the particles of the first metal oxide.

Examples of the method for attaching the second metal oxide to the surface of the positive electrode active material include solid phase synthesis method, liquid phase synthesis method, chemical vapor deposition (CVD) method, atomic layer deposition (ALD) method, and physical vapor deposition (PVD) method. In particular, ALD method is preferred in that the second metal oxide can be attached at a relatively low temperature to the positive electrode active material in the positive electrode active material layer. According to ALD method, the second metal oxide can be attached to the positive electrode active material in an atmosphere of 170 °C or less. Therefore, even when ALD method is applied to the positive electrode active material layer of the manufactured positive electrode, the constituent components of the positive electrode mixture are unlikely to be denatured by heat. For example, the above TiOₓ and VOₓ can be produced by allowing an organic Ti compound or an organic V compound to be adsorbed onto a positive electrode active material, and decomposing or oxidizing it, in an atmosphere of 100 °C or more and 170°C or less, for example, of about 150 °C, under appropriate conditions. Here, the second metal oxide may be attached to the positive electrode active material before blended into the positive electrode mixture. In that case, a positive electrode slurry containing a positive electrode active material with the second metal oxide attached in advance is applied onto the current collector, to form a positive electrode active material layer.

The second metal oxide is preferably contained in the film covering at least part of the surface of the first metal oxide. Note that the first metal oxide is usually an aggregate of particles, and comprises secondary particles each formed by assemblage of a plurality of primary particles. It suffices when the second metal oxide is attached to at least part of the surfaces of the secondary particles. When using two or more kinds of metal elements M, the oxides of the metal elements M may be mixed or may be disposed in layers.

The thickness of the second metal oxide-containing film formed so as to attach to at least part of the surface of the first metal oxide (specifically, the secondary particles) is preferably 30 nm or less, more preferably 10 nm or less. When the thickness of the second metal oxide-containing film is set within the above range, the second metal oxide-containing film is unlikely to inhibit the diffusion of lithium ions during normal use of the secondary battery, and in the event of heat generation such as short circuit, the second metal oxide maintains its high resistance to suppress the current. The thickness of the film can be measured by SEM or TEM cross-sectional observation of the active material particles.

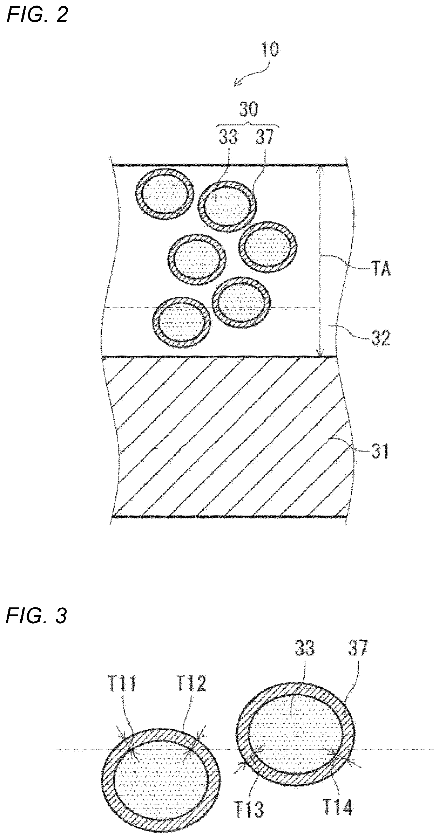

A description will be given below of a calculation method of, for example, a thickness T of a second metal oxide-containing film 37 covering an active material particle 33 in a positive electrode active material layer 32 at a randomly selected position from the surface of a positive electrode current collector 31, with reference to FIGS. 2 and 3. For the sake of convenience, in FIG. 3, only two particles of a first metal oxide (the active material particles) 30 having the second metal oxide-containing film 37 are shown.

Ten active material particles (secondary particles) 30 each partially overlapping a straight line drawn at a position within a region from a position at 0.25TA to a position of 0.75TAfrom the surface of the positive electrode current collector in the positive electrode active material layer and having a maximum diameter of 5 µm or more are selected, where the TA is the thickness of the positive electrode active material layer. For each particle, the thickness of the second metal oxide-containing film at one or two intersections between the straight line and the outer edge of the active material particle 33 is measured (T11, T12, T13, T14, . . . ). The average value of the thicknesses at up to these 20 points is calculated. After calculating this average value, with the data differing by 20% or more from the obtained average value excluded, the average value is calculated again. This corrected average value is determined as the thickness T of the film.

### (Binder)

As the binder for the positive electrode, for example, a resin material is used. Examples of the binder include fluorocarbon resins, polyolefin resins, polyamide resins, polyimide resins, acrylic resins, and vinyl resins. The binder may be used singly or in combination of two or more kinds.

### (Conductive agent)

Examples of the conductive agent include carbon nanotubes (CNTs), carbon fibers other than CNTs, and conductive particles (e.g., carbon black, graphite).

### <Negative electrode>

A negative electrode includes, for example, a negative electrode current collector, and may include a negative electrode active material layer. The negative electrode active material layer is supported on one or both surfaces of the negative electrode current collector.

### [Negative electrode current collector]

As the negative electrode current collector, a nonporous conductive substrate (metal foil, etc.) and a porous conductive substrate (mesh, net, punched sheet, etc.) can be used. Examples of the material of the negative electrode current collector include stainless steel, nickel, a nickel alloy, copper, and a copper alloy.

### [Negative electrode active material layer]

The negative electrode active material layer may be a negative electrode mixture layer constituted of a negative electrode mixture. The negative electrode mixture layer is in the form of a layer or film. The negative electrode mixture contains particles of a negative electrode active material as an essential component, and may contain a binder, a conductive agent, a thickener, and the like, as optional components. A lithium metal foil or lithium alloy foil may be attached as a negative electrode active material layer to the negative electrode current collector.

The negative electrode mixture layer can be formed by, for example, applying a negative electrode slurry of a negative electrode mixture containing particles of a negative electrode active material, a binder, and the like dispersed into a dispersion medium, onto a surface of a negative electrode current collector, followed by drying. The dry applied film may be rolled as necessary.

### (Negative electrode active material)

The negative electrode active material includes a material that electrochemically absorbs and releases lithium ions, lithium metal, a lithium alloy, and the like. As the material that electrochemically absorbs and releases lithium ions, a carbon material, an alloy-type material, and the like can be used. Examples of the carbon material include graphite, graphitizable carbon (soft carbon), and non-graphitizable carbon (hard carbon). Particularly preferred is graphite, which is stable during charging and discharging and whose irreversible capacity is small. As the alloy-type material, a material containing at least one metal capable of forming an alloy with lithium may be used, examples of which include silicon, tin, a silicon alloy, a tin alloy, a silicon compound, and a tin compound.

### (Binder)

The binder may be, for example, styrene-butadiene rubber, but not particularly limited thereto.

### (Conductive agent)

Examples of the conductive agent include carbon nanotubes (CNTs), carbon fibers other than CNTs, and conductive particles (e.g., carbon black, graphite).

### (Thickener)

Examples of the thickener include: cellulose derivatives (cellulose ethers, etc.), such as carboxymethyl cellulose (CMC) and modified products thereof (including salts, such as Na salt), and methyl cellulose; saponified products of a polymer having a vinyl acetate unit, such as polyvinyl alcohol; and polyethers (e.g., polyalkylene oxide, such as polyethylene oxide).

### <Separator>

The separator is interposed between the positive electrode and the negative electrode. The separator is excellent in ion permeability and has moderate mechanical strength and electrically insulating properties. The separator may be a microporous thin film, a woven fabric, a nonwoven fabric, and the like. The material of the separator may be, for example, polyolefin, such as polypropylene and polyethylene. The separator may have a heat-resistant insulating layer as a surface layer on at least one side. The heat-resistant insulating layer may contain an inorganic oxide filler as a major component (e.g., 80 mass% or more), or a heat-resistant resin as a major component (e.g., 40 mass% or more). The heat-resistant resin may be a polyamide resin, such as aromatic polyamide (aramid), a polyimide resin, a polyamide imide resin, and the like.

### <Electrolyte>

The electrolyte may be a liquid electrolyte (electrolyte solution), may be a gel electrolyte, and may be a solid electrolyte. The liquid electrolyte (electrolyte solution) may be, for example, a nonaqueous electrolyte with lithium-ion conductivity. The nonaqueous electrolyte contains, for example, a nonaqueous solvent and a lithium salt dissolved in the nonaqueous solvent. The concentration of the lithium salt in the nonaqueous electrolyte is, for example, 0.5 mol/L or more and 2 mol/L or less. The nonaqueous electrolyte may contain a known additive.

The gel electrolyte contains a lithium salt and a matrix polymer, or contains a lithium salt, a nonaqueous solvent, and a matrix polymer. The matrix polymer may be, for example, a polymer material that absorbs a nonaqueous solvent and turns into a gel. Examples of the polymer material include a fluorocarbon resin, an acrylic resin, a polyether resin, and polyethylene oxide.

The solid electrolyte may be an inorganic solid electrolyte. As the inorganic solid electrolyte, for example, a known material for use in all-solid lithium-ion secondary batteries and the like (e.g., oxide-based solid electrolyte, sulfide-based solid electrolyte, halide-based solid electrolyte, etc.) is used.

As the nonaqueous solvent, for example, a cyclic carbonic acid ester, a chain carbonic acid ester, a cyclic carboxylic acid ester, and the like are used. Examples of the cyclic carbonic acid ester include propylene carbonate (PC), ethylene carbonate (EC), and fluoroethylene carbonate (FEC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). The nonaqueous solvent may be used singly, or in combination of two or more kinds.

Examples of the lithium salt include a lithium salt of a chlorine-containing acid (LiClO₄, LiAlCl₄, LiB₁₀Cl₁₀, etc.), a lithium salt of a fluorine-containing acid (LiPF₆, LiBF₄, LiSbF₆, LiAsF₆, LiCF₃SO₃, LiCF₃CO₂, etc.), a lithium salt of a fluorine-containing acid imide (LiN(SO₂F)₂, LiN(CF₃SO₂)₂, LiN(CF₃SO₂)(C₄F₉SO₂), LiN(C₂F₅SO₂)₂, etc.), and a lithium halide (LiCl, LiBr, LiI, etc.). The lithium salt may be used singly, or in combination of two or more kinds.

### <Structure of secondary battery>

The lithium-ion secondary battery, for example, has a structure in which an electrode group formed by winding the positive electrode and the negative electrode with the separator interposed therebetween is housed together with the nonaqueous electrolyte in an outer body. Without limited thereto, a different form of electrode group may be adopted. For example, a stacked-type electrode group formed by stacking the positive electrode and the negative electrode with the separator interposed therebetween may be adopted. The battery form is also not limited, and may be cylindrical, prismatic, coin, button, or laminate type.

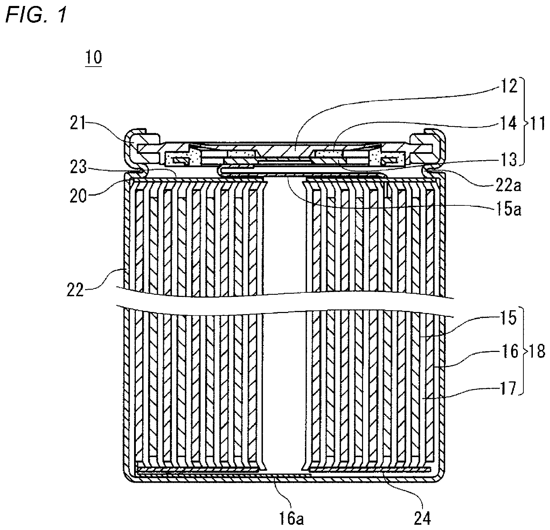

In the following, the structure of the secondary battery will be described with reference to FIG. 1. FIG. 1 is a longitudinal cross-sectional view of a cylindrical nonaqueous secondary battery 10 which is an example of the present embodiment. The present disclosure, however, is not limited to the following configuration.

The secondary battery 10 includes an electrode group 18, a liquid electrolyte (not shown), and a bottomed cylindrical battery can 22 housing them. A sealing assembly 11 is clamped onto the opening of the battery can 22, with a gasket 21 interposed therebetween. This seals the inside of the battery. The sealing assembly 11 includes a valve body 12, a metal plate 13, and an annular insulating member 14 interposed between the valve body 12 and the metal plate 13. The valve body 12 and the metal plate 13 are connected to each other at their respective centers. A positive electrode lead 15a extended from the positive electrode plate 15 is connected to the metal plate 13. Therefore, the valve body 12 functions as a positive external terminal. A negative electrode lead 16a extended from the negative electrode plate 16 is connected to the bottom inner surface of the battery can 22. An annular groove 22a is formed near the open end of the battery can 22. A first insulating plate 23 is placed between one end surface of the electrode group 18 and the annular groove 22a. A second insulating plate 24 is placed between the other end surface of the electrode group 18 and the bottom of the battery can 22. The electrode group 18 is formed of the positive electrode plate 15 and the negative electrode plate 16 wound together, with the separator 17 interposed therebetween.

### <Production method of positive electrode>

A positive electrode for a lithium-ion secondary battery according to an embodiment of the present disclosure can be produced in the following procedure. In the battery, the second metal oxide is attached to at least part of the surface of the first metal oxide.

A step of forming a positive electrode active material layer includes: a supporting step of allowing a first metal oxide (active material particles) to be supported on a surface of a positive electrode current collector, to form a precursor layer; a rolling step of rolling the precursor layer; and a film formation step of exposing the active material particles to a gas phase containing a metal element M to be contained in the second metal oxide, to form a second metal oxide-containing film so as to cover at least part of the surfaces of the active material particles. The rolling step and the film formation step may be performed in any order. The film formation step may be performed after the rolling step, or the rolling step may be performed after the film formation step. With the latter taken as an example, the step of forming a positive electrode active material layer will be specifically described below.

### (I) Supporting step (S 1)

The precursor layer can be formed by applying a positive electrode slurry in which the constituent components of a positive electrode mixture are dispersed into a dispersion medium, onto a surface of a positive electrode current collector, followed by drying. The positive electrode mixture includes particles of a positive electrode active material, as an essential component, and can include a binder, a thickener, and the like, as optional components.

Examples of the dispersion medium include, but are not limited to, water, alcohols such as ethanol, ethers such as tetrahydrofuran, amides such as dimethylformamide, N-methyl-2-pyrrolidone (NMP), and mixed solvents thereof.

### (II) Film formation step (S2)

Next, the active material particles supported on the positive electrode current collector, namely the precursor layer, are exposed to a gas phase containing a metal element M. In this way, a film containing an oxide of the metal element M (second metal oxide) is formed on at least part of the surfaces of the active material particles. When forming a second metal oxide-containing film, the density of the positive electrode active material in the precursor layer is preferably 2.2 g/cm³ or more and 3.2 g/cm³ or less, more preferably 2.5 g/cm³ or more and 3.0 g/cm³ or less.

Examples of the gas phase method include CVD, ALD, and PVD methods. ALD method is particularly preferred in that the oxide film can be formed at a relatively low temperature. According to ALD method, the second metal oxide-containing film can be formed in an atmosphere of 200 °C or less (further, 170 °C or less, or 150 °C or less).

In ALD method, a vaporized precursor (source gas) and an oxidant are alternately supplied into a reaction chamber in which an object to be processed (here, the precursor layer) is placed. In this way, a second metal oxide-containing film is formed on surfaces of the active material particles.

According to ALD method, which allows self-limiting film growth, the metal element M can deposit on the atomic level on a surface of the object. Therefore, according to ALD method, the number of cycles each consisting of: source gas supply (pulsing) → source gas evacuation (purging) -> oxidant supply (pulsing) -> oxidant evacuation (purging) may be controlled to control the overall thickness of the second metal oxide-containing film.

The precursor is an organic metal compound containing a metal element M. As the precursor, various organic metal compounds as conventionally used in ALD method can be used.

When the metal element M is Ti, examples of the precursor containing Ti include bis(t-butylcyclopentadienyl)titanium(IV) dichloride (C₁₈H₂₆Cl₂Ti), tetrakis(dimethylamino)titanium(IV) ([(CH₃)₂N]₄Ti, TDMAT), tetrakis(diethylamino)titanium(IV) ([(C₂H₅)₂N]₄Ti), tetrakis(ethylmethylamino)titanium(IV) (Ti[N(C₂H₅)(CH₃)]₄), titanium(IV) (diisopropoxide-bis(2,2,6,6-tetramethyl-3,5-heptanedioate (Ti[OCC(CH₃)₃CHCOC(CH₃)₃]₂(OC₃H₇)₂), titanium tetrachloride (TiCl₄), titanium(IV) isopropoxide (Ti[OCH(CH₃)₂]₄), and titanium(IV) ethoxide (Ti[O(C₂H₅)]₄). Examples of the precursor containing Al include trimethylaluminum ((CH₃)₃Al, TMA).

The source gas may contain a plurality of kinds of precursors. Into the reaction chamber, different kinds of precursors may be supplied simultaneously or sequentially. Alternatively, the kind of the precursor contained in the source gas may be changed for each cycle.

As the oxidant, an oxidant as conventionally used in ALD method can be used. Examples of the oxidant include water, oxygen, and ozone. The oxidant may be supplied in the form of a plasma generated from the oxidant, into the reaction chamber.

The ALD method conditions are not particularly limited, as long as a second metal oxide-containing film can be formed. The temperature of the atmosphere containing the precursor or oxidant may be 10 °C or more and 200 °C or less, may be 25 °C or more and 200 °C or less, may be 100 °C or more and 200 °C or less, may be 120 °C or more and 200 °C or less, may be 120 °C or more and 170 °C or less, and may be 120 °C or more and 150 °C or less. From a similar point of view, the pressure in the reaction chamber during processing may be, for example, 1×10⁻⁵ Pa or more and 1×10⁵ Pa or less, and may be 1×10⁻⁴ Pa or more and 1×10⁴ Pa or less.

When the temperature of the atmosphere containing the precursor or oxidant in the reaction chamber is 10 °C or more and 200 °C or less (e.g., 120 °C or more and 200 °C or less, or 120 °C or more and 170 °C or less), and the pressure in the reaction chamber during processing is 1×10⁻⁵ Pa or more and 1×10⁵ Pa or less, the pulsing time of the source gas may be 0.01 seconds or more, and may be 0.05 seconds or more. The pulsing time of the source gas may be 5 seconds or less, and may be 3 seconds or less.

After the above supporting step S1 and film formation step S2, the supporting step S 1 may be further performed. For example, a positive electrode active material layer which includes a first positive electrode mixture layer containing active material particles having a second metal oxide-containing film and a second positive electrode mixture layer containing active material particles having no second metal oxide-containing film may be formed, such that the first positive electrode mixture layer is disposed close to the positive electrode current collector, and the second positive electrode mixture layer is disposed on the first positive electrode mixture layer. Thereafter, the film formation step S2 may be further performed.

### (III) Rolling step (S3)

The precursor layer (i.e., positive electrode active material layer) including the active material particles with a second metal oxide-containing film formed on their surfaces may be rolled. The conditions for rolling are not particularly limited, and may be set as appropriate so that the positive electrode active material layer has a predetermined thickness or density. The density of the positive electrode active material in the positive electrode active material layer is preferably, for example, 2.5 g/cm³ or more and 4.0 g/cm³ or less, and may be 3.3 g/cm³ or more and 3.7 g/cm³ or less.

The description is given above of a method of forming a second metal oxide-containing film on the active material particles supported on the positive electrode current collector. However, a positive electrode for a secondary battery including the positive electrode material according to the present disclosure can also be obtained by applying a positive electrode slurry including active material particles with a second metal oxide-containing film formed thereon, onto a surface of the positive electrode current collector.

The active material particles covered with a second metal oxide-containing film can be produced using solid-phase synthesis method, liquid-phase synthesis method, chemical vapor deposition (CVD) method, atomic layer deposition (ALD) method, physical vapor deposition method (PVD) method, and the like.

In the following, the present disclosure will be specifically described with reference to Examples and Comparative Examples. The present disclosure, however, is not limited to the following Examples.

### «Example 1»

### [Production of positive electrode]

For a positive electrode active material (first metal oxide) constituting active material particles, a composite oxide N (LiNi_{0.85}Co_{0.10}Al_{0.05}O₂) having a layered rock-salt type structure and containing lithium and Ni was used. The median diameter D1 in the volume-based particle size distribution of the active material particles measured by a laser diffraction-scattering method was 13 µm. As a positive electrode current collector, a 15-µm-thick aluminum foil was prepared.

NMP was added to a positive electrode mixture containing active material particles (D1 = 13 µm), acetylene black, and polyvinylidene fluoride (PVDF) in a mass ratio of 95:2.5:2.5, and stirred together, to prepare a positive electrode slurry.

### (I) Supporting step (S1)

The positive electrode slurry was applied onto a surface of the aluminum foil serving as a positive electrode current collector, and the applied film was dried, to form a precursor layer of a positive electrode active material layer on each of both sides of the aluminum foil.

### (II) Film formation step (S2)

A laminate (positive electrode precursor) of the positive electrode current collector and the precursor layers was accommodated in a predetermined reaction chamber, and using ALD method, the surfaces of the active material particles in the precursor layer were partially covered with a second metal oxide-containing film in the following procedure.

Tetrakis(dimethylamino)titanium(IV) (TDMAT), which was a precursor serving as a Ti supply source, was vaporized and supplied into the reaction chamber accommodating the positive electrode precursor. The pulsing time was set to 0.1 seconds. The temperature of the atmosphere containing the precursor was controlled to 150 °C, and the pressure in the reaction chamber was controlled to 260 Pa. Then, 30 seconds later, the precursor in excess was purged with nitrogen gas, on the assumption that the surface of the positive electrode precursor was covered with a monomolecular layer of the precursor.

Next, an oxidant (H₂O) was vaporized and supplied into the reaction chamber accommodating the positive electrode precursor. The pulsing time was set to 0.015 seconds. The temperature of the atmosphere containing the oxidant was controlled to 150 °C, and the pressure in the reaction chamber was controlled to 260 Pa. Then, 30 seconds later, the oxidant in excess was purged with nitrogen gas.

A series of operations (ALD cycle) consisting of precursor-supply, -purge, and oxidant-supply, -purge was repeated 60 times, to form an oxide film containing Ti as a second metal oxide-containing film.

The oxide film was analyzed using SEM, XAFS and XPS. The average thickness of the oxide film was 3 nm. The oxide film contained Ti, and the atomic ratio Ti³⁺/Ti⁴⁺ of Ti³⁺ to Ti⁴⁺ was 1.34. The value of x in the oxide TiOₓ was 1.71. In the XPS analysis, with the peak of the inner-shell 1s orbital spectrum of the surface contamination carbon given at 284.6 eV, analysis was made after electrostatic charge correction, using the oxygen 1s orbital spectrum. In peak fitting using a Gaussian function, peaks centered at 530.4 eV and 530.8 eV were determined as corresponding to tetravalent titanium and trivalent titanium, respectively, and using the area ratio thereof, the average titanium valence was calculated.

### (III) Rolling step (S3)

Next, the precursor layers (i.e., positive electrode active material layers) of the active material particles with a second metal oxide-containing film formed on their surfaces were rolled, to adjust the density of the positive electrode active material in the rolled positive electrode active material layers to 3.6 g/cm³. The overall thickness of the positive electrode after rolling was 160 µm.

### [Production of negative electrode]

Water was added to a negative electrode mixture containing graphite serving as a negative electrode active material, sodium carboxymethyl cellulose (CMC-Na), and styrene-butadiene rubber (SBR) in a mass ratio of 96:2:2, and stirred together, to prepare a negative electrode slurry. Next, the negative electrode slurry was applied onto a surface of a copper foil serving as a negative electrode current collector, and the applied film was dried, and then rolled, to form a negative electrode active material layer on each of both sides of the copper foil. The density of the negative electrode active material in the negative electrode active material layers was adjusted to 1.6 g/cm³. The overall thickness of the negative electrode was 170 µm.

### [Preparation of nonaqueous electrolyte]

A nonaqueous electrolyte was prepared by dissolving LiPF₆ at a concentration of 1.0 mol/L in a mixed solvent containing ethylene carbonate (EC) and diethyl carbonate (DEC) in a volume ratio of 3:7.

### [Fabrication of secondary battery]

With a tab attached to each electrode, the positive electrode and the negative electrode were wound spirally with a separator interposed therebetween such that the tab was positioned at the outermost layer, thereby to form an electrode group. The electrode group was inserted into an outer body made of aluminum laminated film and dried under vacuum at 105 °C for two hours. Thereafter, the liquid electrolyte was injected, and the opening of the outer body was sealed, to complete a secondary battery A1.

### <<Comparative Example 1>>

A positive electrode and a secondary battery B1 were produced in the same manner as in Example 1, except that the oxide film formation was not performed.

### <<Comparative Example 2»

A positive electrode and a secondary battery B2 were produced in the same manner as in Example 1, except that in the film formation step S2, the ALD cycle was repeated 20 times at 200 °C. The average thickness of the oxide film was 1 nm. The oxide film contained Ti, and x in the oxide TiOₓ constituting the film was 2. Ti included only Ti⁴⁺ and did not include Ti³⁺.

### <<Comparative Example 3»

A positive electrode and a secondary battery B3 were produced in the same manner as in Example 1, except that in the film formation step S2, the ALD cycle was repeated 60 times at 200 °C. The average thickness of the oxide film was 3 nm. The oxide film contained Ti, and x in the oxide TiOₓ constituting the film was 2. Ti included only Ti⁴⁺ and did not include Ti³⁺.

### <<Comparative Example 4>>

A positive electrode and a secondary battery B4 were produced in the same manner as in Example 1, except that in the film formation step S2, the ALD cycle was repeated 100 times at 200 °C. The average thickness of the oxide film was 5 nm. The oxide film contained Ti, and x in the oxide TiOₓ constituting the film was 2. Ti included only Ti⁴⁺ and did not include Ti³⁺.

### [Evaluation]

With respect to the secondary batteries obtained in Example and Comparative Examples, a nail penetration test was performed for evaluation as described below. The results are shown in Table 1.

### (Nail penetration test)

(a) In a 25 °C environment, the battery was charged at a constant current of 0.3C until the battery voltage reached 4.2 V, and then, continuously, constant-voltage charged until the current value reached 0.05C.
(b) In a 25 °C environment, the tip of a round nail (diameter 2.7 mm) was brought into contact with the center of the battery charged in (a), and driven into the battery at a speed of 1 mm/sec. The driving of the round nail was stopped immediately after the detection of a battery voltage drop (Δ50 mV) due to internal short circuit. The surface temperature of the battery was measured one minute after the battery was short-circuited.

**[Table 1]**

| battery | oxide film | | | surface temperature (°C) |
|---|---|---|---|---|
| | film thickness (nm) | Ti³⁺/Ti⁴⁺ | TiO_{X} | |
| A1 | 3 | 1.34 | TiO_{1.71} | 37 |
| B1 | 0 | - | - | 80 |
| B2 | 1 | 0 | TiO₂ | 53 |
| B3 | 3 | 0 | TiO₂ | 51 |
| B4 | 5 | 0 | TiO₂ | 52 |

Table 1 shows that in the battery A1 including an oxide film formed at 150 °C, the surface temperature was reduced to be 1/2 or less of that in the battery B1 including no oxide film. Furthermore, in the batteries B2 to B4 including an oxide film formed at 200 °C, the surface temperature reached higher than that in the battery A1.

In the batteries B2 to B4, the oxide film contained no Ti₂O₃, in which only TiO₂ was present. In the battery A1, the oxide film contained much Ti₂O₃ having a higher electrical resistance at high temperature than TiO₂, and presumably because of this, the surface temperature was lowered, as compared to the other batteries. This shows that the electrical resistance of the active material particles was maintained even after heat generation, by the oxide film containing TiO₂ and Ti₂O₃ differing in electrical resistance.

### [Industrial Applicability]

The positive electrode for a secondary battery according to the present disclosure and a secondary battery including the same are useful as main power sources for mobile communication devices, portable electronic devices, electric cars, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 10: secondary battery
- 11: sealing assembly
- 12: valve body
- 13: metal plate
- 14: insulating member
- 15: positive electrode plate
- 15a: positive electrode lead
- 16: negative electrode plate
- 16a: negative electrode lead
- 17: separator
- 18: electrode group
- 21: gasket
- 22: battery can
- 22a: groove
- 23: first insulating plate
- 24: second insulating plate
- 31: positive electrode current collector
- 32: positive electrode active material layer
- 30: active material particle having oxide film
- 33: active material particle
- 37: oxide film

## Claims

1. A secondary battery, comprising:
a positive electrode; a negative electrode; a separator interposed between the positive electrode and the negative electrode; and a lithium-ion conductive electrolyte, wherein
the positive electrode includes a positive electrode current collector, and a positive electrode active material layer supported on the positive electrode current collector,
the positive electrode active material layer contains a first metal oxide that is a positive electrode active material, and a second metal oxide different from the first metal oxide,
the first metal oxide includes a lithium-containing transition metal oxide,
a metal element M contained in the second metal oxide includes an atom m1 and an atom m2 having different valences from each other,
the atom m1 and the atom m2 are the same element,
the metal element M is at least one metal element selected from the group consisting of Al, Ti, Si, Zr, Mg, Nb, Ta, Sn, Ni, V, and Cr, and
an oxide of the atom m1 and an oxide of the atom m2 are different in temperature dependence of electrical resistance.

2. The secondary battery according to claim 1, wherein the metal element M includes at least Ti.

3. The secondary battery according to claim 1 or 2, wherein
the metal element M includes a trivalent Ti atom (Ti³⁺) and a tetravalent Ti atom (Ti⁴⁺), and
the atomic ratio Ti³⁺/Ti⁴⁺ of the Ti³⁺ to the Ti⁴⁺ is 1.3 or more and 3 or less.

4. The secondary battery according to any one of claims 1 to 3, wherein the second metal oxide is represented by TiOₓ where x is 1.5 or more and less than 2.

5. The secondary battery according to any one of claims 1 to 4, wherein the second metal oxide is formed in a film covering at least part of a surface of the first metal oxide.

6. The secondary battery according to claim 5, wherein a thickness of the film is 30 nm or less.

7. The secondary battery according to claim 5 or 6, wherein a thickness of the film is 10 nm or less.

8. The secondary battery according to any one of claims 1 to 7, wherein an amount of the metal element M contained in the second metal oxide is 0.03 mol% or more and 10 mol% or less, relative to a total amount of metal elements other than Li contained in the first metal oxide.
